# EUROPÄISCHE PATENTANMELDUNG

(11) **EP 2 060 782 A1**
(43) Veröffentlichungstag der Anmeldung: **20.05.2009**
(21) Anmeldenummer: 07794044.3
(22) Anmeldetag: 13.06.2007
(51) Int. Cl.: F03B 13/26, F03B 13/08

(54) **HYDROELEKTRISCHE ANLAGE**

(30) Priorität: 30.08.2006 RU 2006131184; 30.08.2006 RU 2006131181
(71) Anmelder: Otkritoe Aktsiohernoe Obschestvo "Malaya Mezenskay", Moscow, 119311 (RU); Zakritoe Aktsiohernoe Obschestvo "Obedinenie" Inge, Moscow, 105064 (RU)
(72) Erfinder: BORODIN, Valeriy Viktorovich, Arkhangelskaya obl., 164501 (RU); BUDNICHENKO, Mikhail Anatolevitch, Arkhangelskaya obl., 164501 (RU); ISTORIK, Boris Lvovitch, Moscow, 103006 (RU); KONDRASHOV, Yuriy Vsevolodovitch, Arkhangelskaya obl., 164501 (RU); PASTUHOV, Vladimir Pavlovitch, Arkhangelskaya obl., 164501 (RU); RUDYAK, Mikhail Semenovitch, Moscow, 121069 (RU); USACHEV, Igor Nikolaevitch, Moscow, 109028 (RU); SHPOLIANSKIY, Yuliy Borisovitch, Moscow, 125040 (RU)
(74) Vertreter: Jeck, Anton
(86) Internationale Anmeldenummer: PCT/RU2007/000314
(87) Internationale Veröffentlichungsnummer: WO 2008/026964

(57) **Zusammenfassung**

Die Erfindung kann in Gebäuden für Gezeitenkraftwerke oder Kraftwerke verwendet werden, die von einem Fluss mit niedrigem Wasserpegel betrieben werden. Die Wasserturbinenanlage gemäß der Erfindung weist mindestens zwei übereinander liegende, waagerecht angeordnete Kraftleitungen, einen Generator, der über den Kraftleitungen installiert ist, und in den Kraftleitungen angeordnete Orthogonalturbinen auf. Die Wellen dieser Turbinen sind senkrecht in Lagerträgern gelagert. Abgedichtete Verarbeitungshohlräume, die durch abnehmbare Trennwände gebildet sind, liegen in den Wänden der Kraftleitungen. Die Lagerträger und Verbindungselemente, die die Wellen der Turbinen untereinander und mit der Welle des Generators filmartig verbinden, sind in den Verarbeitungshohlräumen angeordnet. Diese Erfindung erleichtert die Montage bzw. Demontage und die Wartung sowie vermindert die Investitionskosten.

## Beschreibung

Die Erfindung betrifft den Wasserkraftbau. Sie kann beim Bau von Gezeiten- bzw. Flutkraftwerken (FKW) und Niederdruckflusskraftwerken benutzt werden, deren Wasserströmungen relativ tief sind, d. h. die Tiefe überschreitet den Turbinendurchmesser um mehr als das 2,5-fache.

Es ist eine Etagenwasserkraftanlage [1] bekannt, in der waagerechte Turbinenwasserleitungen übereinander in drei Etagen angeordnet sind. In jeder dieser Turbinenwasserleitungen ist ein gekapseltes Wasserkraftaggregat angebracht. Das Wasserkraftaggregat besteht aus einer waagerecht angeordneten Axialturbine und aus einer darin angebrachten wasserdichten Generatorkapsel, welche einen Multiplikator aufweist. Der Laufraddurchmesser der Turbinen der zwei unteren Etagen beträgt 10 m. Aus derzeitiger technischer Sicht ist dies der Grenzdurchmesser für Wasserdruckturbinen. Die spezifischen Maximalwerte von Gewicht und Kosten von Wasserkraftaggregaten sind bei diesem Durchmesser entsprechend hoch (pro 1 kW der installierten Leistung). Nachteile dieser Anlage [1] sind eine komplizierte Montage und ein komplizierter Betrieb der gekapselten Etagenwasserkraftaggregate sowie ein hoher Preis der Anlage (pro 1 kW der installierten Leistung).

Es ist eine Wasserkraftanlage bekannt, welche mindestens zwei Orthogonalturbinen und einen Generator enthält. Die Orthogonalturbinen sind in Turbinenwasserleitungen eingebaut. Die Turbinenwellen sind mit einer gemeinsamen Welle über einen luftdichten Hohlraum eines Pfeilers verbunden. Der Pfeiler trennt die Turbinenwasserleitungen. Die Welle des Generators ist kinematisch mit der gemeinsamen Welle [2] verbunden. In dieser Anlage [2] liegen die Turbinenwasserleitungen in einer gleichen waagerechten Ebene. Die Turbinen- und die Generatorwellen sind mit einer gemeinsamen Welle verbunden. Der Generator ist auf einer Ebene mit den Wasserleitungen in einem abgedichteten Raum des erweiterten Pfeilers angeordnet, welcher die zwei Turbinenwasserleitungen trennt.

Ein Nachteil dieser Anlage [2] besteht darin, dass es erforderlich ist, einen erweiterten Pfeiler und einen großen abgedichteten Raum im Körper dieses Pfeilers zu bauen, um den Generator und die damit verbundenen elektrischen Einrichtungen unterzubringen und zu betreiben. Ein weiterer Nachteil besteht in der komplizierten Montage der Anlage und dem komplizierten Betreiben der elektrischen Leistungsausrüstung, das durch die engen Verhältnisse des im erweiterten Körper des Pfeilers gebildeten Raums hervorgerufen wird.

Aufgaben der Erfindung sind: Sicherstellung einer einfachen Montage, Demontage und betriebsmäßigen Wartung der Anlage und ihrer Ausrüstung, eine Senkung der Kosten pro 1 kW der installierten Leistung, hohe spezifische Kennwerte der Durchsatzkapazität und der Leistung pro Längeneinheit der Druckfront der Wasserkraftanlage.

### Beschreibung der Erfindung

Gegenstand der Erfindung ist eine Wasserkraftanlage. Sie enthält:
- mindestens zwei waagerecht übereinander angeordnete Turbinenwasserleitungen,
- einen Generator, welcher über den Turbinenwasserleitungen installiert ist, und
- in den Turbinenwasserleitungen angeordnete Orthogonalturbinen.

Die Wellen der Orthogonalturbinen sind senkrecht in Lagerringen angeordnet. Dabei sind in den Wänden der Turbinenwasserleitungen technische Hohlräume gebildet. Die technischen Hohlräume werden durch abnehmbare Trennwände abgedichtet. In den Hohlräumen sind Lagerungen und Verbindungselemente angeordnet, welche die Turbinenwellen untereinander und mit der Generatorwelle verbinden.

Mit diesen Maßnahmen wird die Aufgabe der Erfindung zu gelöst.

Hohe technische Kennwerte und reduzierte Kosten für den Bau der vorgestellten Wasserkraftanlage sind mit einer Betriebsfreundlichkeit für die in den abgedichteten technischen Hohlräumen angeordneten Lagerungen und Verbindungselemente verbunden. Die Verbindungselemente verbinden die Wellen der Orthogonalturbinen mit der Generatorwelle. Dabei können Lagerungen auf Basis ölgeschmierter Wälzlager benutzt werden. Sie weisen einen niedrigeren Reibungswert als wassergeschmierte Lager (Schmierung auf Wasserbasis) auf.

### Die Erfindung wurde für spezielle Ausführungen weiterentwickelt:

Die Lagerungen bzw. Lagerringe können in abnehmbaren wasserdichten Trennwänden befestigt werden. Dies ermöglicht eine bequemere Montage und Demontage der Etagenwasserkraftanlage aus kinematisch verbundenen Orthogonalturbinen und dem Generator beim ersten Zusammenbau und bei der Instandsetzung.

Die Anlage kann mindestens zwei waagerecht entlang der Druckfront der Wasserkraftanlage (d. h. quer über der Wasserströmung) angeordnete Gruppen von Turbinenwasserleitungen enthalten. Die Turbinenwasserleitungen sind übereinander angeordnet. Dies ermöglicht es, die Anlagenleistung unter Aufrechterhaltung der oben genannten Vorteile dadurch zu steigern, dass die Anlage entlang ihrer Druckfront vergrößert wird.

Die Anlage kann mit wasserdichten Verbindungsgängen versehen werden. Diese dienen der Verbindung der technischen Hohlräume mit einem Betriebsschacht der Wasserkraftanlage. Die wasserdichten Verbindungsgänge stellen den Arbeitern des Wasserkraftwerkes einen Zugang zu den abgedichteten technischen Hohlräumen der Anlage aus dem Betriebsschacht sicher. Der Betriebsschacht wird aus dem Wasserkraftgebäude herausgeführt.

Die Anlage kann mit einem Ballastbehälter versehen werden, welcher unter dem Generator angebracht wird. Dieser Behälter wird mit Wasser gefüllt und erhöht die allgemeine Stabilität der Anlage in der Wasserströmung.

Die Anlage kann als eine Einheit mit eigener Schwimmfähigkeit ausgeführt werden. Dies ermöglicht es, die Anlage im Werk komplett anzufertigen und einzurichten und diese dann (selbst)schwimmend zur Baustelle der Wasserkraftanlage zu transportieren. Dadurch wird der Aufbau vereinfacht und günstiger.

### Kurzbeschreibung der Zeichnungen

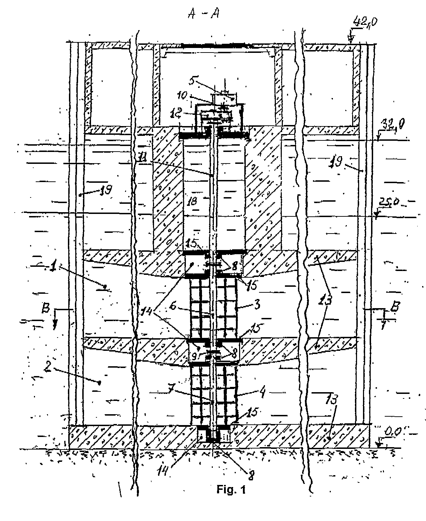

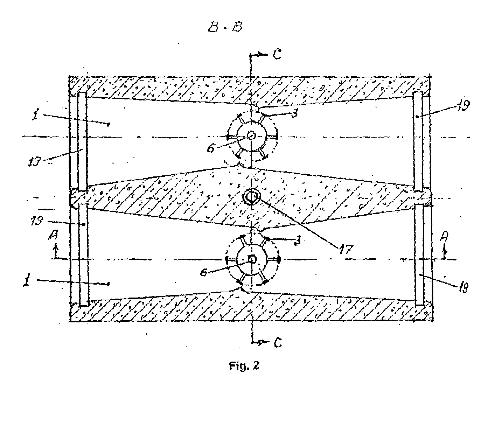

In den Fig. 1-3 ist ein Ausführungsbeispiel der Erfindung (unter Berücksichtigung ihrer Weiterentwicklung) in einer Mehrturbinenanlage abgebildet. Die Mehrturbinenanlage beinhaltet zwei waagerecht entlang der Druckfront angeordnete Gruppen von Turbinenwasserleitungen. Die Turbinenwasserleitungen sind übereinander angeordnet.

In Fig.1 ist ein Schnitt A-A der Anlage dargestellt. Die senkrechte Schnittfläche ist entlang dem Wasserstrom gerichtet und verläuft über eine der Wasserleitungsgruppen und der senkrechten Wellen der Orthogonalturbinen.

In Fig. 2 ist ein Schnitt B-B der Anlage dargestellt. Diese waagerechte Schnittfläche verläuft auf einer Ebene mit der oberen Etage der Turbinenwasserleitungen.

In Fig. 3 ist der senkrechte Schnitt C-C der Anlage gezeigt. Die senkrechte Schnittfläche verläuft entlang der Druckfront der Wasserkraftanlage über senkrechten Wellen zweier Orthogonalturbinen, welche in den Turbinenwasserleitungen von benachbarten Gruppen installiert sind.

### Bevorzugte Ausführungsform der Erfindung

Die Anlage (s. Fig. 1, 2 und 3) enthält zwei Gruppen von horizontal übereinander angeordneten Turbinenwasserleitungen: eine obere Turbinenwasserleitung 1 und eine untere Turbinenwasserleitung 2.

Im mittleren und engsten Teil der Wasserleitungen 1 und 2 sind jeweils Orthogonalturbinen 3 und 4 angeordnet. Über den Wasserleitungen 1 und 2 ist ein Generator 5 installiert. Zwei Wellen 6 und 7 der Turbinen 3 und 4 sind senkrecht in Lagerungen 8 angebracht. Im beschriebenen Ausführungsbeispiel sind die Wellen 6 und 7 kinematisch untereinander mittels eines Verbindungselements 9 in Form einer Kupplung verbunden. Diese Wellen sind mit einer Welle 10 des Generators 5 über ein Verbindungselement verbunden. Das Verbindungselement schließt (außer Verbindungskupplungen) eine Zwischenwelle 11 und einen Multiplikator (bzw. Übersetzer) 12 ein. Bei anderen Ausführungsformen kann das Verbindungselement 9 als eine kurze Zwischenwelle und zwei Zahnkupplungshälften oder als eine elastische Kupplung ausgeführt werden. Die elastische Kupplung gleicht die Fluchtabweichung der Wellen 6 und 7 von Turbinen 3 und 4 aus. Die Fluchtabweichung kann bei der Fertigung und Montage entstehen. In diesem Fall könnten die Zwischenwelle 11 und/oder der Multiplikator 12 nicht benutzt werden.

Technische Hohlräume 14 sind in den waagerechten Wänden 13 der Turbinenwasserleitungen 1 und 2 gebildet. In den technischen Hohlräumen 14 sind die Verbindungselemente der Wellen angebracht und die Lagerungen 8 eingebaut. Der untere Hohlraum 14 ist als eine Nische in der waagerechten Bodenwand 13 der Wasserleitung 2 ausgeführt. Die anderen Hohlräume 14 sind in den Wänden 13 als Durchgangshohlräume ausgeführt.

Die technischen Hohlräume 14 sind vom Wasser mittels abnehmbarer wasserdichter Horizontaltrennwände 15 getrennt. Die Horizontaltrennwände 15 können zum Beispiel als Scheiben mit Abdichtungen ausgeführt werden. Die Scheiben sind mit einer Mittenbohrung für die Welle versehen. Die Lagerungen 8 können in den Trennwänden 15 befestigt werden.

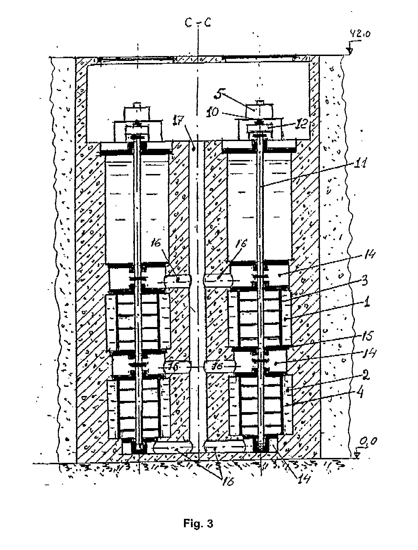

Die Hohlräume 14 sind gegen das Eindringen von Wasser durch Trennwände 15 geschützt und mit Luft unter Normaldruck gefüllt. Deswegen können in den Hohlräumen die Lagerungen 8 eingesetzt werden, welche auf der Basis ölgeschmierter Wälzlager ausgeführt sind. Das Bedienpersonal braucht Zugang zu den Lagerungen 8 und den Verbindungselementen, welche in den Hohlräumen 14 angeordnet sind. Dafür kann die Anlage mit wasserdichten Verbindungsgängen 16 versehen werden. Die Verbindungsgänge 16 stellen eine sichere Verbindung der technischen Hohlräume 14 mit einem Betriebsschacht 17 her. Der Betriebsschacht 17 ist mit einer Wendeltreppe versehen und im Zentralteil der Wasserkraftanlage (s. Fig. 3) angebracht.

Die verlängerte Zwischenwelle 11 geht durch einen Ballastbehälter 18. Wenn der Behälter 18 nicht eingebaut ist, kann die verlängerte Zwischenwelle 11 nicht benutzt werden.

Ist die Anlage mit eigener Schwimmfähigkeit ausgeführt, müssen die Turbinenwasserleitungen 1 und 2 mit Vorrichtungen zur Installation und Abnahme der Transportsperrvorrichtungen, z. B. Schwimmports (schwimmende Sperrvorrichtungen) sowie mit provisorischen Abdichtungsmitteln versehen werden. Dabei erfolgt die Montage der Orthogonalturbinen und des Generators in der Regel im Werk. Danach wird die Anlage für eine schwimmende Zulieferung an die Baustelle der Wasserkraftanlage, z. B. ein Flutkraftwerk (FKW) vorbereitet. Um die Schwimmfähigkeit sicherzustellen, muss das Wasser aus dem Ballastbehälter 18 und aus den anderen Hohlräumen, einschließlich der Wasserleitungen 1 und 2, abgepumpt werden.

Nach der Installation an der Betriebsstelle wird der Ballastbehälter 18 mit Wasser gefüllt, um die Stabilität der Anlage in der Wasserströmung zu erhöhen.

Um die Turbinen zu steuern, können Wasserleitungen 1 und 2 mit Arbeitssperrvorrichtungen, z. B. Vorturbinensperrvorrichtungen in beliebiger Bauweise (in Fig. 1-3 nicht abgebildet) versehen werden. Solche Sperrvorrichtungen sind in der Regel in Flusskraftwerken erforderlich. Vorturbinensperrvorrichtungen sind in Gezeiten- bzw. Flutkraftwerken (FKW) nicht unbedingt erforderlich. In letzterem Fall ist zur Funktionssteuerung der Turbinen eine Bremsvorrichtung (in Fig. 1-3 nicht abgebildet) vorgesehen.

An den Stirnflächen der Wasserleitungen 1 und 2 können Nuten 19 für die Sperrvorrichtungen vorgesehen werden. Sie werden für Instandsetzungsarbeiten und für die Schwimmbeförderung installiert.

Die Funktionsweise der Anlage innerhalb des Flutkraftwerks (FKW) ist wie folgt.
Die Druckfront trennt das FKW-Becken vom Meer ab. Bei Flut- und Ebbeschwankungen des Meeresspiegels entstehen zyklische Schwankungen der Wasserspiegeldifferenzen zwischen dem Becken und dem Meer. Diese Wasserspiegeldifferenz bewirkt einen statischen Druck, welcher periodisch sowohl der Größe als auch dem Vorzeichen nach wechselt. Wenn der Wasserspiegel im Becken und im Meer gleich ist, ist der statische Druck gleich Null, und eine Strömung in den Druckwasserleitungen 1 und 2 ist so gut wie nicht vorhanden. Daher werden die Wasserturbinen 3 und 4 praktisch kaum bewegt. Während der Flut steigt der Meeresspiegel, und das Wasser in den Wasserleitungen 1 und 2 fließt vom Meer aus in das Becken hinein. Da die Durchsatzleistung der FKW-Wasserleitungen begrenzt ist, steigt der Beckenwasserspiegel langsamer als der Meeresspiegel an, und der Absolutdruck an dem Flutkraftwerk (FKW) und dementsprechend die Wasserfließgeschwindigkeit in den Wasserleitungen 1 und 2 nehmen zu. Die Bremsen der Wellen 6 und 7 der Turbinen 3 und 4 sowie die damit kinematisch verbundene Welle 10 des Generators 5 werden gelöst. Wenn die Differenz ca. 0,3 m beträgt, fangen die Turbinen unter Wirkung des bei dem Druck in den Wasserleitungen 1 und 2 fließenden Wassers an, sich zu drehen. Die Umdrehungszahl erhöht sich langsam. Wenn der Druck ca. 0,5 m beträgt, erreicht die Umdrehungszahl der Turbinen 6 und 7 ihren Nennwert, und die Umdrehungszahl der Welle 10 des Generators 5 wird durch den Multiplikator (Übersetzer) 12 gesteigert und erreicht einen Synchronwert, bei dem sich der Generator 5 an das Stromnetz anschließt. Bei einer weiteren Erhöhung über 0,5 m gibt der Generator 5 dem Stromnetz seine Wirkleistung ab, wobei die Wirkleistung bei einer Druckerhöhung weiter vergrößert wird. Wenn die Ebbe eintritt, fällt der Druck langsam ab. Die abgegebene Wirkleistung des Generators 5 nimmt ab. Wird die Wirkleistung gleich Null, schaltet sich der Generator 5 vom Stromnetz ab. Die Turbinenwellen bremsen ab und halten an. Danach passiert der Druck je nach Ebbevorgang den Nullwert. Wenn der Beckenwasserspiegel unter den Meerwasserspiegel fällt, bekommt der Druck das entgegengesetzte Vorzeichen. Somit wird der Wasserrückfluss aus dem Becken ins Meer über die Wasserleitungen 1 und 2 sichergestellt. Erreicht der Druck den jeweiligen Wert in umgekehrter Richtung, so wird die Bremse der Wasserkraftanlage wieder gelöst. Die Wasserkraftanlage beschleunigt. Da die Kennwerte der Orthogonalturbinen sowie ihre Drehrichtung von der Wasserfließrichtung [2] unabhängig sind, hängt ihre Drehrichtung nicht von der Wasserfließrichtung ab. Deswegen läuft der Generator 5 genau wie oben beschrieben. Danach wird die Ebbe durch die Flut abgelöst, und der gesamte Betriebszyklus der Anlage wiederholt sich. Die Wasserkraftanlagen mit den Turbinen, welche in den übereinander angeordneten Wasserleitungen eingebaut sind, funktionieren auf ähnliche Weise und sind synchron mit der ersteren Anlage.

Wenn die Sperrstelle des Flutkraftwerks (FKW) 25 bis 30 m beträgt und wenn die Anlage mit einer Einetagenanordnung der Wasserleitungen ausgeführt ist, müssen Turbinen mit einem technischen Laufradgrenzdurchmesser von 10 m eingesetzt werden. Das gilt sowohl für Axial- als auch für Orthogonalturbinen. Eine Benutzung von Turbinen mit kleinerem Durchmesser bei einer Einetagenanordnung der Wasserleitungen und mit solchen Tiefenwerten zahlt sich wirtschaftlich nicht aus, weil die spezifischen Durchsatzleistungswerte sowie die Leistungswerte pro Längeneinheit der Druckfront von Flutkraftwerken (FKW) reduziert werden. Jedoch steigen das spezifische Gewicht sowie der Preis der Wasserkraftanlagen (pro 1 kW der installierten Leistung) je nach Vergrößerung des Turbinenlaufraddurchmessers auch an. Wenn der Turbinendurchmesser z. B. doppelt so groß wird (10 m statt 5 m), vergrößert sich das spezifische Gewicht der Wasseranlage (pro 1 kW der installierten Leistung) fast um das Zweifache. Die Nutzung von Wasserkraftanlagen mit kleinerem Durchmesser in einem Mehretagensystem der Turbinenwasserleitungen mit gekapselten Wasseranlagen, welche in jeder der Wasserleitungen [1] angeordnet werden, erschwert die Montage- und die Betriebsbedingungen. Dadurch verteuert sich letztendlich das Flutkraftwerk. Außerdem sind sie für einen wirksamen Betrieb nur wenig geeignet.

Die Erfindung stellt eine Senkung der Kosten sicher, und zwar dadurch, dass sie (im Unterschied zu den aus [1] und [2] bekannten Lösungen) es ermöglicht, Turbinen mit kleinerem Durchmesser einzusetzen, ohne die spezifischen Durchsatzkapazitätswerte sowie die Leistung pro Längeneinheit der Druckfront zu verringern. Die Ausführung der Erfindung ermöglicht es z. B, in einem Flutkraftwerk (FKW) mit einer 25 - 30 m tiefen Wasserströmung statt Wasseranlagen mit Orthogonalturbinen von 10 m Durchmesser solche mit 5 m großem Durchmesser einzusetzen. Dabei bleiben die spezifische Durchsatzkapazität sowie die Leistung der Anlagen pro Längeneinheit der Druckfront des Flutkraftwerks unverändert erhalten. Gleichzeitig nehmen die Gesamtkosten der Wasseranlage bei unveränderter Gesamtleistung des Flutkraftwerks wesentlich (um fast die Hälfte) ab. Auch die Kosten des FKW-Gebäudes werden um ca. um 30 % gesenkt. Eine Senkung der Gebäudekosten je nach Verringerung des Turbinendurchmessers erfolgt dadurch, dass die neuen hydraulischen Bedingungen eine geringere Länge von Wasserleitungen benötigen.

Die Montage, die Demontage sowie die betriebsmäßige Instandhaltung der gesamten Einrichtungen innerhalb der vorgeschlagenen Anlage vereinfachen sich wesentlich im Vergleich zu den Anlagen nach [1] und [2]. Nach einer Sperrung der Wasserleitungen 1 und 2 durch die jeweiligen Sperrvorrichtungen sowie dem Abführen des Wassers kann die gesamte Ausrüstung im Unterwasserteil der Anlage (einschließlich der Pos. 3, 4, 8, 9, 11 und 15) durch die Durchgangshohlräume 14 und die Freiräume im mittleren Teil der Wasserleitungen 1 und 2 abgesenkt oder angehoben werden. (Die Abmessungen der Durchgangshohlräume 14 stellen eine vertikale Verlagerung der unten installierten Einrichtungen sicher.) Die Betriebsfreundlichkeit ist insbesondere dadurch sichergestellt, dass im Gegensatz zu den Anlagen nach [1] und [2] die Anordnung der Ausrüstungen in der vorgeschlagenen Anlage in Bezug auf die betriebsmäßige Instandhaltung optimiert ist. Der Generator 5 und die damit verbundenen elektrischen Einrichtungen erfordern häufig einen freien Zugang des Personals. Deswegen sind der Generator 5 und seine elektrischen Einrichtungen im oberen Trockenteil der Anlage (z. B. über der oberen Halterung) angeordnet. Der Unterwasserteil der Anlage enthält in den abgedichteten Hohlräumen 14 Einrichtungen (Lagerungen, Verbindungselemente, Trennwände), welche nur seltenen einen Zugang für die laufende betriebsmäßige Wartung erfordern.

## Patentansprüche

1. Wasserturbinenanlage mit mindestens zwei übereinander liegenden waagerecht angeordneten Turbinenwasserleitungen (1. 2), einem Generator (5), welcher über den Turbinenwasserleitungen (1, 2) installiert ist, und mit in den Turbinenwasserleitungen (1, 2) angeordneten Orthogonalturbinen (3, 4), deren Wellen (6, 7) senkrecht in Lagerungen (8) angeordnet sind,
**dadurch gekennzeichnet,**
**dass** in den Wänden (13) der Turbinenwasserleitungen (1, 2) technische Hohlräume (14) gebildet sind, die durch abnehmbare Trennwände (15) abgedichtet sind, und dass in den Holräumen (14) die Lagerungen (8) und Verbindungselemente (9) angeordnet sind, welche die Turbinenwellen (6, 7) untereinander und mit einer Generatorwelle (10) verbinden.

2. Anlage nach Anspruch 1,
**dadurch gekennzeichnet,**
**dass** die Lagerungen (8) in den abnehmbaren Trennwänden (15) angeordnet sind.

3. Anlage nach Anspruch 1 oder 2,
**dadurch gekennzeichnet,**
**dass** sie mindestens zwei entlang einer Druckfront angeordnete Gruppen von Turbinenwasserleitungen (1, 2) aufweist, wobei die Turbinenwasserleitungen (1, 2) übereinander angeordnet sind.

4. Anlage nach einem der vorhergehenden Ansprüche,
**dadurch gekennzeichnet,**
**dass** sie mit wasserdichten Verbindungsgängen (16) versehen ist, die eine Verbindung der technischen Hohlräume (14) mit dem Betriebsschacht (17) der Wasserkraftanlage darstellen.

5. Anlage nach einem der vorhergehenden Ansprüche,
**dadurch gekennzeichnet,**
**dass** sie einen Ballastbehälter (18) enthält, welcher unter dem Generator (5) angeordnet ist.

6. Anlage nach einem der vorhergehenden Ansprüche,
**dadurch gekennzeichnet,**
**dass** sie als eine selbst schwimmende Einheit ausgeführt ist.
**Informationsquellen**
1. Meereskraftwerke. Herausgegeben von L.B. Bernstein. Moskau, AO "Institut Gidroprojekt", 1994, Band 1, S. 194, Abb. 12.12.
2. Patent der RF Nr. 2216644 vom 27.12.2001. IPC F03B 7/00, 13/00
